(19)

**Europäisches Patentamt**

**European Patent Office**

**Office européen des brevets**

(11) **EP 4 671 543 A1**

(12) **EUROPEAN PATENT APPLICATION**

(43) Date of publication:
31.12.2025 Bulletin 2026/01

(21) Application number: 25178602.6

(22) Date of filing: 23.05.2025

(51) International Patent Classification (IPC):
*F04D 27/00* (2006.01)     *F16K 37/00* (2006.01)
*G01N 29/12* (2006.01)

(52) Cooperative Patent Classification (CPC):
G01N 29/12; F04D 27/00; F16K 37/0041

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 25.06.2024 US 202418753466

(71) Applicant: Honeywell International Inc.
Charlotte, NC 28202 (US)

(72) Inventors:
• SAI, Bin
Charlotte, 28202 (US)
• MANNS, Patrick
Charlotte, 28202 (US)
• KLAREN, Winfried
Charlotte, 28202 (US)

(74) Representative: Haseltine Lake Kempner LLP
Cheapside House
138 Cheapside
London EC2V 6BJ (GB)

(54) **SYSTEM AND METHOD FOR INFRASOUND-BASED DIAGNOSTICS**

(57) A system is provided for detecting an anomaly in a monitored device having one or more internal components that are mechanically displaced during operation of the monitored device which produces pressure variations internal to the monitored device. For example, a system comprises a passive infrasound sensor mounted to an exterior wall of the monitored device to detect infrasound produced by the pressure variations and a monitoring device comprising a controller. The controller is configured to receive data from the passive infrasound sensor corresponding to the detected infrasound, compare the data received from the passive infrasound sensor to a plurality of infrasound reference signals to determine if the detected infrasound is indicative of an anomaly in at least one of the one or more internal components.

**EP 4 671 543 A1**

FIG. 1

**Description**

FIELD OF THE INVENTION

Embodiments of the present disclosure generally relate to monitoring systems, and, more particularly, to infrasound monitoring systems.

BACKGROUND

In applications in which a gas used by a machine is supplied at a pressure that is too high or fluctuating too much for the machine and in which the pressure needs to be controlled and regulated to have smooth and stable pressure output, pressure reducing gas regulators are used both to reduce the pressure of the incoming gas and to keep the pressure of the gas provided to the machine fairly constant.

Such pressure reducing gas regulators use a closed loop feedback control mechanism, typically using spring-controlled valves. Wear and tear of the springs and/or valves or incorrect pressure settings can cause issues in which the feedback loop starts to oscillate continuously. Such oscillation causes the springs and valves to experience constant and abrupt changes, sometimes at considerable magnitude, which can cause stressful fatigue of moving parts and lead to potential failures.

Through applied effort, ingenuity, and innovation, many of these identified problems have been solved by developing solutions that are included in embodiments of the present disclosure, many examples of which are described in detail herein.

BRIEF SUMMARY

Various embodiments described herein relate to systems and method for detecting an anomaly in a monitored device having one or more internal components that are mechanically displaced during operation of the monitored device which produces pressure variations internal to the monitored device.

In accordance with various embodiments of the present disclosure, a system is provided for detecting an anomaly in a monitored device having one or more internal components that are mechanically displaced during operation of the monitored device which produces pressure variations internal to the monitored device. In some embodiments, a system comprises a passive infrasound sensor mounted to an exterior wall of the monitored device to detect infrasound produced by the pressure variations and a monitoring device comprising a controller. The controller is configured to receive data from the passive infrasound sensor corresponding to the detected infrasound, compare the data received from the passive infrasound sensor to a plurality of infrasound reference signals to determine if the detected infrasound is indicative of an anomaly in at least one of the one or more internal components.

In some embodiments, the monitored device comprises a pressure reducing gas regulator, a reciprocating pump, or a gate valve.

In some embodiments, the one or more internal components comprise a spring and/or a valve.

In some embodiments, the controller is further configured to determine if the detected infrasound is oscillating.

In some embodiments, the controller is further configured to perform digital signal processing on the data received from the passive infrasound sensor.

In some embodiments, the system further comprises a wideband condenser microphone that is another type of passive sensor positioned outside of the monitored device to detect sound produced within and during operation of the monitored device over a larger frequency band at a very low noise floor than is detected by the passive infrasound sensor. The controller is further configured to receive data from the wideband passive condenser microphone corresponding to the detected sound. The controller is further configured to correlate the data received from the wideband condenser microphone corresponding to the detected sound and the data received from the passive infrasound sensor corresponding to the detected infrasound to reduce false detection and increase a fused confidence level of a determination that the detected infrasound is indicative of an anomaly in at least one of the one or more internal components.

In some embodiments, the controller is further configured to determine a flow rate of a gas through the monitored device and if the flow rate of the gas through the monitored device is stable. If the flow rate of the gas through the monitored device is stable, the controller is further configured to determine if a gap between an input pressure of the monitored device and an output pressure of the monitored device is stable, increasing, or decreasing. If the gap between the input pressure of the monitored device and the output pressure of the monitored device is increasing, the controller is further configured to use downwardly adjusted frequency data for the plurality of infrasound reference signals. If the gap between the input pressure of the monitored device and the output pressure of the monitored device is decreasing, the controller is further configured to use upwardly adjusted frequency data for the plurality of infrasound reference signals.

In some embodiments, if the controller has determined that the detected infrasound is indicative of an anomaly in at least one of the one or more internal components, the controller is further configured to provide a user notification.

In some embodiments, the controller is further configured to determine a flow rate of a gas through the monitored device and to compare the determined flow rate of the gas through the monitored device to a predetermined low flow rate threshold. If the determined flow rate of the gas through the monitored device is below the predetermined low flow rate threshold, the user notification is an alert. If the determined flow rate of the gas through the monitored device is above the predetermined low flow rate threshold, the user notification is an alarm.

In some embodiments, the infrasound sensor comprises an infrasound triaxial accelerometer or a single accelerometer.

In accordance with various embodiments of the present disclosure, a method is provided for detecting an anomaly in a monitored device having one or more internal components that are mechanically displaced during operation of the monitored device which produces pressure variations internal to the monitored device. In some embodiments, the method comprises receiving data from a passive infrasound sensor mounted to an exterior wall of the monitored device, the data corresponding to infrasound produced by the pressure variations and detected by the passive infrasound sensor; comparing the data received from the passive infrasound sensor to a plurality of infrasound reference signals; and determining, based on comparing the data received from the passive infrasound sensor to the plurality of infrasound reference signals, if the detected infrasound is indicative of an anomaly in at least one of the one or more internal components.

The foregoing illustrative summary, as well as other exemplary objectives and/or advantages of the disclosure, and the manner in which the same are accomplished, are further explained in the following detailed description and its accompanying drawings.

BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

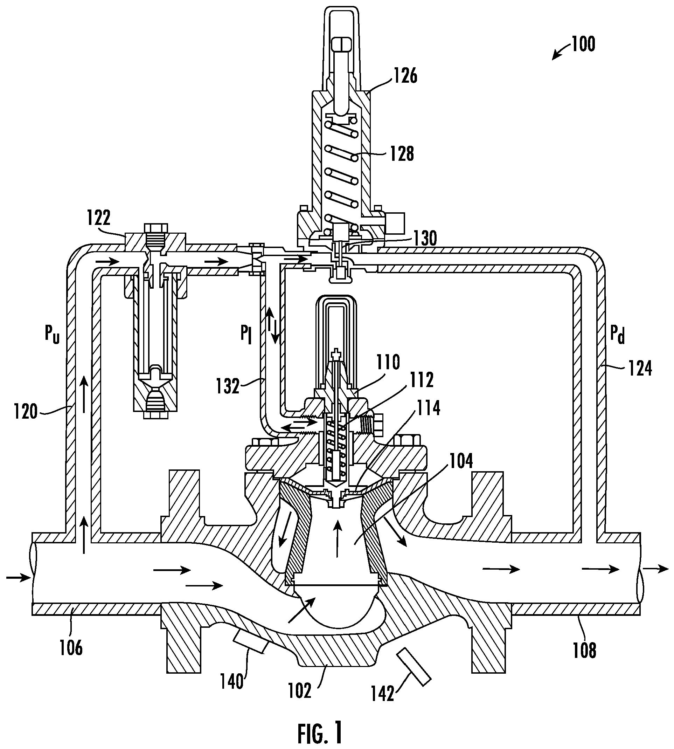

FIG. 1 is a sectional view of an example pressure reducing gas regulator device in accordance with example embodiments of the present disclosure;

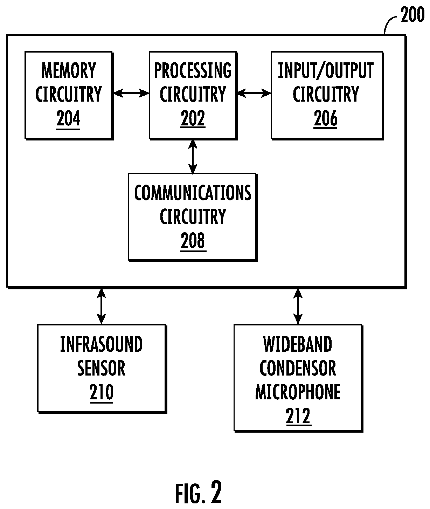

FIG. 2 is a block diagram of an example system for detecting an anomaly in a monitored device having one or more internal components that are mechanically displaced during operation of the monitored device which produces pressure variations internal to the monitored device in accordance with example embodiments of the present disclosure; and

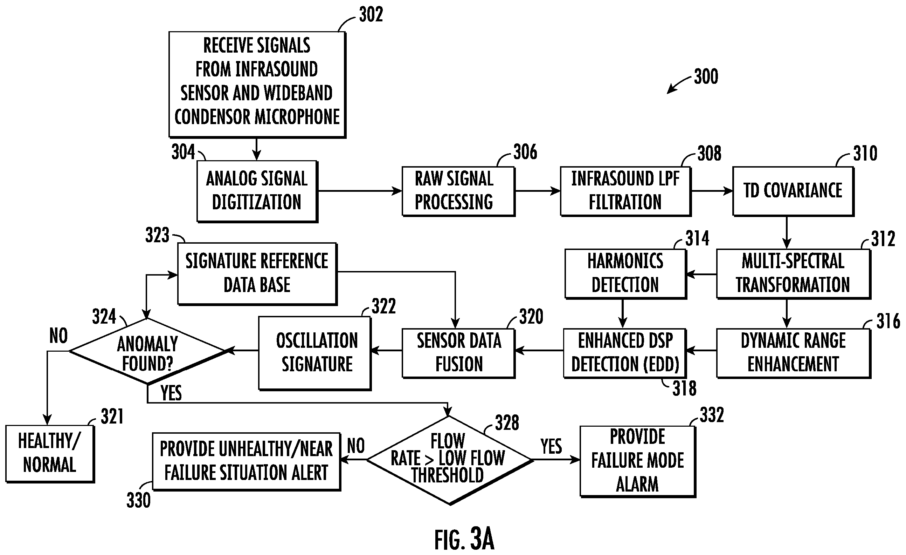

FIGS. 3A-3C are flowcharts illustrating an example method for detecting an anomaly in a monitored device having one or more internal components that are mechanically displaced during operation of the monitored device which produces pressure variations internal to the monitored device in accordance with example embodiments of the present disclosure.

DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

Various embodiments of the present disclosure overcome the above technical challenges and difficulties and provide various technical improvements and advantages. For example, various embodiments of the present disclosure provide an example system for detecting an anomaly in a monitored device having one or more internal components that are mechanically displaced during operation of the monitored device which produces pressure variations internal to the monitored device. Various embodiments of the present disclosure provide an example monitoring device for detecting an anomaly in a monitored device having one or more internal components that are mechanically displaced during operation of the monitored device which produces pressure variations internal to the monitored device. Various embodiments of the present disclosure provide an example method for detecting an anomaly in a monitored device having one or more internal components that are mechanically displaced during operation of the monitored device which produces pressure variations internal to the monitored device.

Embodiments of the present disclosure provide systems, devices, and methods for detecting an anomaly in a monitored device. Such a monitored device may be any device that has one or more internal components that are mechanically displaced during operation of the monitored device which produces pressure variations internal to the monitored device. Such a monitored device may be, for example, a pressure reducing gas regulator, a reciprocating pump, or a gate valve. For simplicity, such monitored devices will be referred to herein as pressure reducing gas regulators, gas regulators, regulators, or monitored devices. Such an anomaly may be, for example, oscillations caused by wear and tear of one or more springs and/or valves within the monitored device.

Based on research and experience, it has been determined that conventional methods used to monitor the health of machines with rotating components (e.g., turbines, generators) is not applicable to pressure reducing gas regulators and similar devices. A gas regulator's internal mechanical movement is unlike that of a turbine or other similar rotating devices in that the gas regulator's valve/spring does not generate rotational or angular speed, its displacement in movement is in a range of fewer millimeters, and its pace is much slower due to elasticity effect. However, it has been determined that there is a correlation between the spring/valve movements and pressure variations within such gas pressure reducing valves or gas regulators. As such, embodiments of the present disclosure use non-intrusive sensors (i.e., positioned outside of the device and not intruding into the device) to detect motion of the valve and spring inside such gas regulators. The motion of the spring and valve product pressure variations within the device. In this regard, the external sensor(s) of embodiments of the present disclosure detect infrasound that can capture the effect imposed by the pressure waves impinging on the wall of such a monitored device. The infrasound spectrum lies in the lower end of the sound spectrum (i.e., less than 20 Hertz (Hz)) and is inaudible to human ears.

Embodiments of the present disclosure provide a non-intrusive sensing and diagnostic solution that can provide real-time information of the health of a monitored device's internal components to enable potential issues to be addressed before a failure occurs, thereby reducing downtime.

Embodiments of the present disclosure use at least one outside sensor to auscultate (i.e., listen to) the main body or housing of a gas pressure reducing valve or gas regulator to collect diagnostic signals. In various embodiments, the sensor detects infrasound that emanates from the main body impacted by the motion of internal valves and/or springs and/or pistons and converts the infrasound into electrical signals. In various embodiments, digital signal processing (DSP) is used to identify and extract infrasound signatures associated with unhealthy situations.

Embodiments of the present disclosure use a passive infrasound sensor. That is, a sensor that detects/ receives infrasound, but does not transmit any sound. Embodiments of the present disclosure do not use an active sensor. In this regard, systems and methods of embodiments of the present disclosure are distinguished from systems and methods that use active sensors which receive signals from a transmitter (e.g., a separate transmitter or a transmitter combined with the sensor receiver (i.e., transceiver)). In various embodiments, the passive infrasound sensor is mounted to an external wall of the monitored device.

Embodiments of the present disclosure include a monitoring device that receives data from the passive infrasound sensor corresponding to the detected infrasound and processes/analyzes the data.

In some embodiments, at least one wideband low-noise microphone (e.g., condenser type) which can detect small signals in noise (i.e., the lower the noise, the smaller the signal that can be detected above the noise) is also positioned external to the monitored device to detect sound across a wider frequency band. In some embodiments, the sound detected by the wideband microphone can be used to make correlations with the detected infrasound to confirm the identification of the infrasound signatures associated with unhealthy situations.

Referring now to FIG. 1, a sectional view of an example single-stage pressure reducing gas regulator device in accordance with example embodiments of the present disclosure is provided. The example gas regulator 100 of FIG. 1 is termed a pilot type pressure reducing gas regulator. The disclosed method is also applicable to any suitable type of gas pressure reducing valve or gas regulator, including but not limited to direct acting regulators (not pilot operated), indirect acting regulators (pilot operated), indirect acting regulators (diaphragm regulator), indirect acting regulators (axial flow), and double stage pilot system regulators. The gas regulator of FIG. 1 comprises a main body 102 defining a main chamber 104. An inlet 106 receives a gas from a supply line (not illustrated) and an outlet 108 delivers the gas, for example, to a machine (not illustrated) which uses the gas. Gas flows from the inlet 106 into the main chamber 104 of the main body and then out through the outlet 108. A main valve assembly 110, which comprises a main valve spring 112 and a main valve diaphragm 114 controls the flow of gas out of the main chamber 104 to the outlet 108 (the operation of the main valve assembly 110 is described below).

An inlet pressure line 120 comes off the inlet 106. The pressure in the inlet pressure line 120 is termed the upstream pressure (Pu). An outlet pressure line 124 comes off the outlet 108. The pressure in the outlet pressure line 124 is termed the downstream pressure (Pd). A filter 122 is connected inline with the inlet pressure line 120 to capture debris that may be in the gas. An upstream end of the outlet pressure line 124 is connected to a pilot valve assembly 126. The pilot valve assembly 126 comprises a pilot valve spring 128 and a pilot valve 130. The pilot valve assembly 126 controls the operation of the main valve assembly to maintain the desired downstream pressure (as described below).

The downstream end of the inlet pressure line 120 is connected to a pilot pressure line 132. The pressure in the pilot pressure line 132 is termed the loading pressure Pl. One end of the pilot pressure line 132 is connected to the pilot valve assembly 126 and the opposite end of the pilot pressure line 132 is connected to the main valve assembly 110.

In operation, the loading pressure is controlled by the pilot valve assembly 126, and the loading pressure controls the opening and closing of the main valve assembly 110. As the downstream pressure decreases, the pilot valve assembly 126 opens (or opens further, if already partly open), thereby bleeding pressure from the pilot pressure line 132 to decrease the loading pressure. As the loading pressure decreases, the main valve assembly 110 opens (or opens further, if already partly open) to allow gas (or more gas) to flow from the inlet 106 to the outlet 108, thereby increasing the downstream pressure. As the downstream pressure increases, the pilot valve assembly 126 closes (partly or completely) to reduce or stop bleeding pressure from the pilot pressure line 132 to increase the loading pressure (as gas continues to flow into the pilot pressure line 132 from the inlet pressure line 120). As the loading pressure increases, the main valve assembly 110 closes (partly or completely) to reduce or stop gas (or more gas) flow from the inlet 106 to the outlet 108, thereby decreasing the downstream pressure. In this way, the pilot valve assembly 126 and main valve assembly 110 work together to maintain the downstream pressure at or near the desired pressure. The pilot valve assembly 126 typically includes an adjustment mechanism to set the desired pressure.

As illustrated in FIG. 1, in various embodiments an infrasound sensor 140 is mounted to the exterior of the gas regulator 100. In various embodiments, the infrasound sensor can be mounted in any suitable location in which infrasound emanating from within the gas regulator can be detected. In the illustrated embodiment, the infrasound sensor 140 is mounted to the exterior of the main body 102. In various embodiments, the infrasound sensor may be mounted to the gas regulator using any suitable mechanism or method, such as an adhesive or a magnet. In various embodiments, any suitable infrasound sensor may be used, such as an infrasound triaxial accelerometer. Other types of accelerometers may also be used. For example, a single axis accelerometer may be used as long as the mounting sensor axis orientation is inline with the motion direction. Further, multiple single accelerometers can also be used to measure different directions of motion if necessary.

As illustrated in FIG. 1, in various embodiments a wideband passive microphone 142 having a wide frequency response range (i.e., associated with wide frequency band; the lower the noise floor, the wider the frequency response; the frequency response is defined here as the wideband passive microphone reacting to different sound wave frequencies at a magnitude that can be detected) is mounted adjacent to the gas regulator 100. In various embodiments, the wideband passive low-noise microphone can be mounted in any suitable location in which sound at at least low-frequency regions emanating from within the gas regulator can be detected. In the illustrated embodiment, the wideband microphone 142 is mounted near but not in contact with the main body 102. In various embodiments, the wideband microphone detects sound produced within and during operation of the monitored device over a larger frequency band than is detected by the passive infrasound sensor. In various embodiments, the wideband microphone may be mounted adjacent to the gas regulator using any suitable mechanism or method. In various embodiments, any suitable wideband microphone may be used, such as a condenser type wideband microphone. Other types of microphones can also be used as long as such microphones can pick up the low-frequency signals at good sensitivity (e.g., pressure field microphone).

In various embodiments, more than one infrasound sensor may be used and/or more than one wideband microphone may be used. In such embodiments, the data from the multiple infrasound sensors and/or the data from the multiple wideband microphones would be correlated to provide an increased confidence level in the detection of an anomaly.

In various embodiments, the data from the infrasound sensor and the data from the wideband microphone (if present) is provided to a monitoring device in which the data is processed and analyzed to detect an anomaly.

Referring now to FIG. 2, a block diagram of an example monitoring device in accordance with example embodiments of the present disclosure is provided. The example monitoring device 200 of FIG. 2 receives data from the infrasound sensor 140 and data from the wideband microphone 142 (if present). The connection between the example monitoring device 200 and the infrasound sensor 140 and the connection between the example monitoring device 200 and the wideband microphone 142 may be wired or wireless. The example monitoring device of FIG. 2 comprises a processor or processing circuitry 202, memory circuitry 204, input/output circuitry 206, and communications circuitry 208. In some embodiments, one or more portions of the example device 200 are configured to execute and perform the operations described herein.

Although components are described with respect to functional limitations, it should be understood that at least some of the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

Processing circuitry 202 may be embodied in a number of different ways. In various embodiments, the use of the terms "processor" or "processing circuitry" should be understood to include a single core processor, a multi-core processor, multiple processors internal to the example device 200, and/or one or more remote or "cloud" processor(s) external to the example device 200. In some example embodiments, processing circuitry 202 may include one or more processing devices configured to perform independently. Alternatively, or additionally, processing circuitry 202 may include one or more processor(s) configured in tandem via a bus to enable independent execution of operations, instructions, pipelining, and/or multithreading.

In an example embodiment, the processing circuitry 202 may be configured to execute instructions stored in the memory circuitry 204 or otherwise accessible to the processor. Alternatively, or additionally, the processing circuitry 202 may be configured to execute hard-coded functionality. As such, whether configured by hardware or software methods, or by a combination thereof, processing circuitry 202 may represent an entity (e.g., physically embodied in circuitry) capable of performing operations according to embodiments of the present disclosure while configured accordingly. Alternatively, or additionally, processing circuitry 202 may be embodied as an executor of software instructions, and the instructions may specifically configure the processing circuitry 202 to perform the various algorithms embodied in one or more operations described herein when such instructions are executed. In some embodiments, the processing circuitry 202 includes hardware, software, firmware, and/or a combination thereof that performs one or more operations described herein.

In some embodiments, the processing circuitry 202 (and/or co-processor or any other processing circuitry assisting or otherwise associated with the processor) is/are in communication with the memory circuitry 204 via a bus for passing information among components of the example device 200.

Memory or memory circuitry 204 may be non-transitory and may include, for example, one or more volatile and/or non-volatile memories. In some embodiments, the memory circuitry 204 includes or embodies an electronic storage device (e.g., a computer readable storage medium). In some embodiments, the memory circuitry 204 is configured to store information, data, content, applications, instructions, or the like, for enabling the example device 200 to carry out various operations and/or functions in accordance with example embodiments of the present disclosure.

Input/output circuitry 206 may be included in the example device 200. In some embodiments, input/output circuitry 206 may provide output to the user and/or receive input from a user. The input/output circuitry 206 may be in communication with the processing circuitry 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processing circuitry 202 and/or input/output circuitry 206 may be configured to control one or more operations and/or functions of one or more user interface elements through computer program instructions (e.g., software and/or firmware) stored on a memory accessible to the processor (e.g., memory circuitry 204, and/or the like). In some embodiments, the input/output circuitry 206 includes or utilizes a user-facing application to provide input/output functionality to a computing device and/or other display associated with a user. In some embodiments, the input/output circuitry 206 one or more indicator lights or the like for providing a user notification (e.g., an alert or warning, as described further below).

Communications circuitry 208 may be included in the example device 200. The communications circuitry 208 may include any means such as a device or circuitry embodied in either hardware or a combination of hardware and software that is configured to receive and/or transmit data from/to a network and/or any other device, circuitry, or module in communication with the example device 200. In some embodiments the communications circuitry 208 includes, for example, a network interface for enabling communications with a wired or wireless communications network. Additionally or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors (including but not limited to the infrasound sensor 140 and the wideband microphone 142), and/or other external computing device(s) in communication with the example device 200. In some embodiments, the communications circuitry 208 transmits (wired or wirelessly) information related to one or more anomalies detected in a monitored device.

In some embodiments, two or more of the sets of circuitry 202-208 are combinable. Alternatively, or additionally, one or more of the sets of circuitry 202-208 perform some or all of the operations and/or functionality described herein as being associated with another circuitry. In some embodiments, two or more of the sets of circuitry 202-208 are combined into a single module embodied in hardware, software, firmware, and/or a combination thereof.

While the description above provides an example device 200, it is noted that the scope of the present disclosure is not limited to the description above. In some examples, an example device 200 in accordance with the present disclosure may be in other forms. In some examples, an example device 200 may comprise one or more additional and/or alternative elements, and/or may be structured differently than that illustrated in FIG. 2.

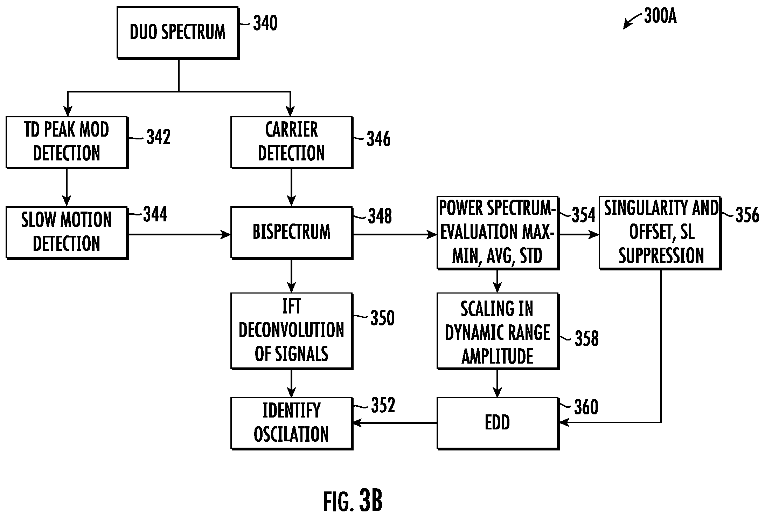

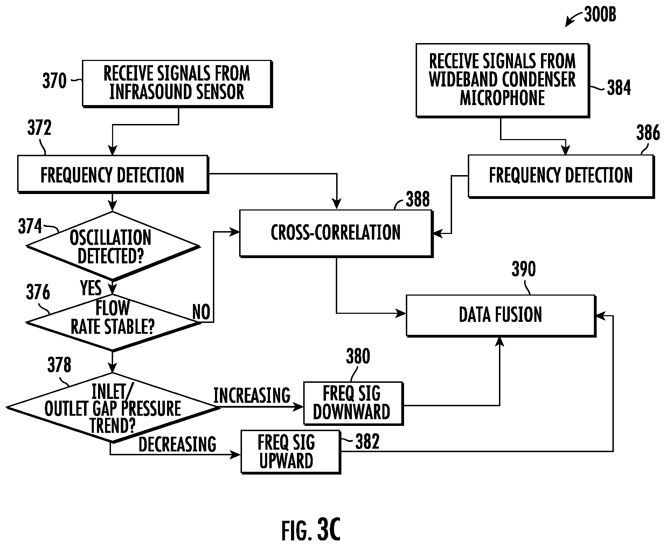

Reference will now be made to FIGS. 3A-3C which provides a flowchart illustrating example steps, processes, procedures, and/or operations in accordance with various embodiments of the present disclosure. Various methods described herein, including, for example, methods as shown in FIG. 3, may provide various technical benefits and improvements.

In various embodiments, the example method comprises a method for detecting an anomaly in a monitored device having one or more internal components that are mechanically displaced during operation of the monitored device which produces pressure variations internal to the monitored device. The example method for detecting an anomaly in a monitored device may be performed repeatedly during operation of the monitored device.

Referring now to FIG. 3A, an example method 300 is illustrated. The example method begins at step/operation 302. At step/operation 302, a processor (such as, but not limited to, the processing circuitry 202 of the example device 200 described above in connection with FIG. 2, in conjunction with the communications circuitry 208 of the example device 200 described above in connection with FIG. 2) receives data from an infrasound sensor (such as, but not limited to, the infrasound sensor 210 of the example device 200 described above in connection with FIG. 2) corresponding to infrasound detected by the infrasound sensor and optionally receives data from a wideband microphone (such as, but not limited to, the wideband microphone 212 of the example device 200 described above in connection with FIG. 2).

At step/operation 304, a processor (such as, but not limited to, the processing circuitry 202 of the example device 200 described above in connection with FIG. 2, optionally in conjunction with analog-to-digital converter circuitry (not illustrated)) converts the analog data from the infrasound sensor and the wideband microphone to digital data.

At step/operation 306, a processor (such as, but not limited to, the processing circuitry 202 of the example device 200 described above in connection with FIG. 2) processes the raw data from the infrasound sensor and the wideband microphone. For example, such raw signal processing may include removing low quality data. The raw data from the infrasound sensor and the wideband microphone is voluminous, as the sampling rate is typically high (e.g., 25,000 / second). As such, the raw signal processing may include taking a representative sampling of the raw data for further processing.

At step/operation 308, a processor (such as, but not limited to, the processing circuitry 202 of the example device 200 described above in connection with FIG. 2) uses a low pass filter (LPF) to remove data that is far above the infrasound acoustic range.

At step/operation 310, a processor (such as, but not limited to, the processing circuitry 202 of the example device 200 described above in connection with FIG. 2) analyzes the time domain (TD) covariance of the data to ensure data quality and consistency.

At step/operation 312, a processor (such as, but not limited to, the processing circuitry 202 of the example device 200 described above in connection with FIG. 2) performs a multi-spectral transformation of the data. One example implementation of performing a multi-spectral transformation of the data is illustrated in FIG. 3B (described below).

At step/operation 314, a processor (such as, but not limited to, the processing circuitry 202 of the example device 200 described above in connection with FIG. 2) detects any harmonics in the data to help eliminate clutters.

At step/operation 316, a processor (such as, but not limited to, the processing circuitry 202 of the example device 200 described above in connection with FIG. 2) performs dynamic range enhancement of the data to deal with drastic or extreme signal variations.

At step/operation 318, a processor (such as, but not limited to, the processing circuitry 202 of the example device 200 described above in connection with FIG. 2) performs enhanced digital signal processing detection (EDD) on the data. The processor uses enhanced digital signal processing (DSP) techniques to further analyze the data to identify oscillations that may indicate an anomaly in the internal components of the monitored device.

At step/operation 320, a processor (such as, but not limited to, the processing circuitry 202 of the example device 200 described above in connection with FIG. 2) uses data fusion techniques to compare the data from the infrasound sensor and the data from the wideband microphone to increase the confidence in the data analysis. One example implementation of performing such data fusion is illustrated in FIG. 3C (described below).

At step/operation 322, a processor (such as, but not limited to, the processing circuitry 202 of the example device 200 described above in connection with FIG. 2) identifies characteristics and extract e.g., frequencies or spectral patterns of any oscillations that have been identified.

At step/operation 324, a processor (such as, but not limited to, the processing circuitry 202 of the example device 200 described above in connection with FIG. 2) compares the oscillations that have been identified with an oscillation signature reference database 323 to determine if an anomaly is present.

In various embodiments, an oscillation signature reference database is created in advance by subjecting one or more test devices (e.g., gas regulators) to a plurality of different test conditions and detecting and recording the infrasound emanating from the test device(s) using a plurality of different infrasound sensors. In various embodiments, the oscillation signature reference database may cover a variety of machines to be monitored, including a variety of different types of machines (e.g., pressure reducing gas regulators, reciprocating pumps, gate valves, etc.) and/or a variety of different brands/models of machines. In various embodiments, the oscillation signature reference database may be created using (1) a single test device that is representative of all types of possible monitored devices (e.g., a single test device that is representative of pressure reducing gas regulators, reciprocating pumps, gate valves, etc.), (2) a single test device that is representative of all brands and models of each type of possible monitored devices (e.g., the database includes test data for a single representative test device model of a pressure reducing gas regulator, a single representative test device model of a reciprocating pump, and a single representative test device model of a gate valve), and/or (3) a test device for each specific brand/model of each type of possible monitored device (e.g., the database includes test data for a plurality of specific brands/models of a pressure reducing gas regulator, a plurality of specific brands/models of a reciprocating pump, and a plurality of specific brands/models of a gate valve). In various embodiments, the oscillation signature reference database may be created using a plurality of different types of infrasound sensors, including a variety of different brands/models of each one or more different types of infrasound sensor. In various embodiments, the oscillation signature reference database may be created using a variety of different test conditions, including different flow rates (e.g., 400, 1200, 2000 cubic meters per hour), different input pressures (e.g., 30, 50, 80 bar), and/or different output pressures (e.g, 2, 10 bar). In various embodiments, the oscillation signature reference database may be created using a test device (or multiple test devices) with internal components (e.g., spring, valve) that are in good condition and with internal components that are beginning to fail. In various embodiments, the oscillation signature reference database may include one or more different detection results, such as the frequency and/or spectral patterns of the detected infrasound under each of the above-described test conditions.

If it is determined at step/operation 324 that an anomaly is not present, the process proceeds to step/operation 326 at which point a processor (such as, but not limited to, the processing circuitry 202 of the example device 200 described above in connection with FIG. 2) determines that a healthy or normal operation condition of the monitored device is present.

In various embodiments, if an anomaly is present, it is determined if the monitored device is in a low flow condition or not. In various embodiments, the urgency of addressing an anomaly depends on whether the monitored device is in a low flow condition or not. In various embodiments, if the monitored device is in a low flow condition, addressing the anomaly is less urgent and, if the monitored device is not in a low flow condition, addressing the anomaly is more urgent. In various embodiments, a user notification is provided if an anomaly is detected. In various embodiments, the nature of the user notification varies depending on whether the monitored device is in a low flow condition or not.

In various embodiments, whether the monitored device is in a low flow condition or not is determined by comparing the flow rate of the gas through the monitored device to a predetermined low flow threshold. In various embodiments, the predetermined low flow threshold may vary. In one example embodiment, the predetermined low flow threshold is 2.5% of the maximum flow rate.

If it is determined at step/operation 324 that an anomaly is present, the process proceeds to step/operation 328 at which point a processor (such as, but not limited to, the processing circuitry 202 of the example device 200 described above in connection with FIG. 2) determines if the flow rate of the gas through the monitored device is above a predetermined low flow threshold. In various embodiments, the processor receives a gas flow rate via a flow rate sensor (not illustrated).

If it is determined at step/operation 328 that the flow rate of the gas through the monitored device is not above a predetermined low flow threshold, the process proceeds to step/operation 330. At step/operation 330, a processor (such as, but not limited to, the processing circuitry 202 of the example device 200 described above in connection with FIG. 2) provides an unhealthy / near failure situation user alert. Such an alert notifies a user that corrective action should be taken soon, but not necessarily urgently. Although it is not shown in FIG. 2 explicitly, the alarm can be sent for example, through physical wired or wireless connection to edge devices, industrial computer servers, or cloud devices via secured field bus, TCP/IP, LoRAWAN, Bluetooth, NB-IoT, WIFI, Zigbee etc., and IoT protocols such as MQTT (Message Queuing Telemetry Transport).

If it is determined at step/operation 328 that the flow rate of the gas through the monitored device is above a predetermined low flow threshold, the process proceeds to step/operation 332. At step/operation 332, a processor (such as, but not limited to, the processing circuitry 202 of the example device 200 described above in connection with FIG. 2) provides a failure mode user alarm. Such an alarm notifies a user that corrective action should be taken urgently. Although it is not shown in FIG. 2 explicitly, the alarm can be sent , for example, through physical wired or wireless connection to edge devices, industrial computer servers, or cloud devices via secured field bus, TCP/IP, LoRAWAN, Bluetooth, NB-IoT, WIFI, Zigbee etc., and IoT protocols such as MQTT (Message Queuing Telemetry Transport).

One example implementation of performing a multi-spectral transformation of the data is illustrated in FIG. 3B. In various embodiments, an oscillating alike signal received from the infrasound sensor may have a fluctuating amplitude. Typically, any such fluctuation in the amplitude is slow. In this regard, in various embodiments there are often two frequency spectrums to analyze - a slow amplitude fluctuation and the faster carrier signal. Thus, at step/operation 340, a processor (such as, but not limited to, the processing circuitry 202 of the example device 200 described above in connection with FIG. 2) begins a duo spectrum analysis. At step/operation 342, a processor (such as, but not limited to, the processing circuitry 202 of the example device 200 described above in connection with FIG. 2) performs a time domain peak modulation detection on the amplitude fluctuation and, at step/operation 344, a processor (such as, but not limited to, the processing circuitry 202 of the example device 200 described above in connection with FIG. 2) detects the slow motion signal. At step/operation 346, a processor (such as, but not limited to, the processing circuitry 202 of the example device 200 described above in connection with FIG. 2) detects the faster carrier signal.

At step/operation 348, a processor (such as, but not limited to, the processing circuitry 202 of the example device 200 described above in connection with FIG. 2) performs a bi-spectrum analysis. In various embodiments, the bi-spectrum analysis involves analyzing phase coupling and the interaction of different frequency (non-linear) signals. In various embodiments, this involves equation 1 multiplying the two frequency spectra and the conjugate of the combined frequency spectrum.

$$BiSp = FT(S1(f1)) * FT(S2(f2) * FT^{conj}(S1(f1) + S2(f2) \quad \text{-(1)};$$

where

DFT = Discrete Fourier transform;
DFT$^{conj}$ = Discrete Fourier transform of complex signal conjugate;
$S1(f_1)$ = signal with frequency component 1; and
$S2(f_2)$ = signal with frequency component 2.

At step/operation 354, a processor (such as, but not limited to, the processing circuitry 202 of the example device 200 described above in connection with FIG. 2) performs a power spectrum evaluation to determine the maximum, minimum, average, and standard deviation of the spectrum. In various embodiments, this involves omitting the phase information by multiplying the spectrum with its own conjugate.

At step/operation 356, a processor (such as, but not limited to, the processing circuitry 202 of the example device 200 described above in connection with FIG. 2) performs singularity and offset for side lobe suppression.

At step/operation 358, a processor (such as, but not limited to, the processing circuitry 202 of the example device 200 described above in connection with FIG. 2) performs scaling of the amplitude in the dynamic range.

At step/operation 360, a processor (such as, but not limited to, the processing circuitry 202 of the example device 200 described above in connection with FIG. 2) performs enhanced digital signal processing detection (EDD).

At step/operation 350, a processor (such as, but not limited to, the processing circuitry 202 of the example device 200 described above in connection with FIG. 2) performs deconvolution of the signals using an Inverse Fourier Transform (IFT).

At step/operation 352, a processor (such as, but not limited to, the processing circuitry 202 of the example device 200 described above in connection with FIG. 2) uses the preceding multi-spectral transformation steps to identify an oscillation.

In various embodiments, data fusion techniques are used to compare the data from the infrasound sensor and the data from the wideband microphone to increase the confidence in the data analysis. One example implementation of performing such data fusion is illustrated in FIG. 3C.

At step/operation 370, a processor (such as, but not limited to, the processing circuitry 202 of the example device 200 described above in connection with FIG. 2, in conjunction with the communications circuitry 208 of the example device 200 described above in connection with FIG. 2) receives data from an infrasound sensor (such as, but not limited to, the infrasound sensor 210 of the example device 200 described above in connection with FIG. 2) corresponding to infrasound detected by the infrasound sensor. At step/operation 372, a processor (such as, but not limited to, the processing circuitry 202 of the example device 200 described above in connection with FIG. 2) detects the frequency of the signal from the infrasound sensor.

At step/operation 384, a processor (such as, but not limited to, the processing circuitry 202 of the example device 200 described above in connection with FIG. 2, in conjunction with the communications circuitry 208 of the example device 200 described above in connection with FIG. 2) receives data from a wideband microphone (such as, but not limited to, the wideband microphone 212 of the example device 200 described above in connection with FIG. 2). At step/operation 386, a processor (such as, but not limited to, the processing circuitry 202 of the example device 200 described above in connection with FIG. 2) detects the frequency of the signal from the wideband microphone.

At step/operation 388, a processor (such as, but not limited to, the processing circuitry 202 of the example device 200 described above in connection with FIG. 2) cross-correlates the frequency data from step/operation 372 and the frequency data from step/operation 386.

At step/operation 390, a processor (such as, but not limited to, the processing circuitry 202 of the example device 200 described above in connection with FIG. 2) uses the cross-correlated frequency data from step/operation 388 to perform data fusion to increase the confidence in the data analysis.

At step/operation 374, a processor (such as, but not limited to, the processing circuitry 202 of the example device 200 described above in connection with FIG. 2) determines if an oscillation has been detected.

If it is determined at step/operation 374 that an oscillation has been detected, the process proceeds to step/operation 376. At step/operation 376, a processor (such as, but not limited to, the processing circuitry 202 of the example device 200 described above in connection with FIG. 2) determines if the flow rate is stable. If it is determined at step/operation 376 that the flow rate is not stable, the process continues with cross-correlation at step/operation 388.

If it is determined at step/operation 376 that the flow rate is stable, the process proceeds to step/operation 378. At step/operation 378, a processor (such as, but not limited to, the processing circuitry 202 of the example device 200 described above in connection with FIG. 2) determines the inlet/outlet gap pressure trend. That is, whether the ratio of the inlet pressure to the outlet pressure is increasing or decreasing. In various embodiments, test data has shown that the frequency of the detected infrasound decreases when the ratio of the inlet pressure to the outlet pressure is increasing and increases when the ratio of the inlet pressure to the outlet pressure is decreasing.

If it is determined at step/operation 378 that the inlet/outlet gap pressure ratio is increasing, the process proceeds to step/operation 380. At step/operation 380, a processor (such as, but not limited to, the processing circuitry 202 of the example device 200 described above in connection with FIG. 2) uses a downwardly adjusted version of the frequency signal in the data fusion of step/operation 390.

If it is determined at step/operation 378 that the inlet/outlet gap pressure ratio is decreasing, the process proceeds to step/operation 382. At step/operation 382, a processor (such as, but not limited to, the processing circuitry 202 of the example device 200 described above in connection with FIG. 2) uses an upwardly adjusted version of the frequency signal in the data fusion of step/operation 390.

In some embodiments, the method illustrated in FIGS. 3A-3C may be performed repeatedly during operation of the monitored device.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. A system for detecting an anomaly in a monitored device having one or more internal components that are mechanically displaced during operation of the monitored device which produces pressure variations internal to the monitored device, the system comprising:

   a passive infrasound sensor mounted to an exterior wall of the monitored device to detect infrasound produced by the pressure variations; and
   a monitoring device comprising a controller configured to receive data from the passive infrasound sensor corresponding to the detected infrasound, compare the data received from the passive infrasound sensor to a plurality of infrasound reference signals to determine if the detected infrasound is indicative of an anomaly in at least one of the one or more internal components.

2. The system of claim 1, wherein the monitored device comprises a pressure reducing gas regulator, a reciprocating pump, or a gate valve.

3. The system of claim 1, wherein the one or more internal components comprise a spring and/or a valve and/or a piston.

4. The system of claim 1, wherein the controller is further configured to determine if the detected infrasound is oscillating.

5. The system of claim 1, wherein the controller is further configured to perform digital signal processing on the data received from the passive infrasound sensor.

6. The system of claim 1, further comprising a passive wideband condenser microphone positioned outside of the monitored device to detect sound produced by mechanical displacement of the one or more internal components within and during operation of the monitored device over a larger frequency band than is detected by the passive infrasound sensor;

   wherein the controller is further configured to receive data from the wideband condenser microphone corresponding to the detected sound; and
   wherein the controller is further configured to correlate the data received from the wideband condenser microphone corresponding to the detected sound and the data received from the passive infrasound sensor corresponding to the detected infrasound to increase a confidence level of a determination that the detected infrasound is indicative of an anomaly in at least one of the one or more internal components.

7. The system of claim 1, wherein the controller is further configured to determine a flow rate of a gas through the monitored device;

   wherein the controller is further configured to determine if the flow rate of the gas through the monitored device is stable;
   wherein, if the flow rate of the gas through the monitored device is stable, the controller is further configured to determine if a gap between an input pressure of the monitored device and an output pressure of the monitored device is stable, increasing, or decreasing;
   wherein, if the gap between the input pressure of the monitored device and the output pressure of the monitored device is increasing, the controller is further configured to use downwardly adjusted frequency data for the plurality of infrasound reference signals; and
   wherein, if the gap between the input pressure of the monitored device and the output pressure of the monitored device is decreasing, the controller is further configured to use upwardly adjusted frequency data for the plurality of infrasound reference signals.

8. The system of claim 1, wherein, if the controller has determined that the detected infrasound is indicative of an anomaly in at least one of the one or more internal components, the controller is further configured to provide a user notification.

9. The system of claim 8, wherein the controller is further configured to determine a flow rate of a gas through the monitored device;

   wherein the controller is further configured to compare the determined flow rate of the gas through the monitored device to a predetermined low flow rate threshold;
   wherein, if the determined flow rate of the gas through the monitored device is below the predetermined low flow rate threshold, the user notification is an alert; and
   wherein, if the determined flow rate of the gas through the monitored device is above the predetermined low flow rate threshold, the user notification is an alarm.

10. The system of claim 1, wherein the infrasound sensor comprises an infrasound triaxial accelerometer, an infrasound single-axis accelerometer, or multiple infrasound single axis accelerometers having different orientations.

11. A method of detecting an anomaly in a monitored device having one or more internal components that are mechanically displaced during operation of the monitored device which produces pressure variations internal to the monitored device, the method comprising:

receiving data from a passive infrasound sensor mounted to an exterior wall of the monitored device, the data corresponding to infrasound produced by the pressure variations and detected by the passive infrasound sensor; comparing the data received from the passive infrasound sensor to a plurality of infrasound reference signals; and determining, based on comparing the data received from the passive infrasound sensor to the plurality of infrasound reference signals, if the detected infrasound is indicative of an anomaly in at least one of the one or more internal components.

12. The method of claim 11, further comprising determining if the detected infrasound is oscillating.

13. The method of claim 11, further comprising:

receiving data from a wideband low-noise condenser microphone positioned outside of the monitored device, the data corresponding to sound produced within and during operation of the monitored device and detected by the wideband condenser microphone, the sound detected by the wideband condenser microphone being over a larger frequency band than is detected by the passive infrasound sensor; and correlating the data received from the wideband condenser microphone corresponding to the detected sound and the data received from the passive infrasound sensor corresponding to the detected infrasound to increase a confidence level of a determination that the detected infrasound is indicative of an anomaly in at least one of the one or more internal components.

14. The method of claim 11, further comprising:

determining a flow rate of a gas through the monitored device; determining if the flow rate of the gas through the monitored device is stable; if the flow rate of the gas through the monitored device is stable, determining if a gap between an input pressure of the monitored device and an output pressure of the monitored device is stable, increasing, or decreasing; if the gap between the input pressure of the monitored device and the output pressure of the monitored device is increasing, using downwardly adjusted frequency data for the plurality of infrasound reference signals; and if the gap between the input pressure of the monitored device and the output pressure of the monitored device is decreasing, using upwardly adjusted frequency data for the plurality of infrasound reference signals.

15. The method of claim 11, wherein, if it is determined that the detected infrasound is indicative of an anomaly in at least one of the one or more internal components, the method further comprises:

providing a user notification; determining a flow rate of a gas through the monitored device; and comparing the determined flow rate of the gas through the monitored device to a predetermined low flow rate threshold; wherein, if the determined flow rate of the gas through the monitored device is below the predetermined low flow rate threshold, the user notification is an alert; and wherein, if the determined flow rate of the gas through the monitored device is above the predetermined low flow rate threshold, the user notification is an alarm.

FIG. 1

FIG. 2

FIG. 3A

FIG. 3B

EP 4 671 543 A1

FIG. 3C

Europäisches
Patentamt

European
Patent Office

Office européen
des brevets

# EUROPEAN SEARCH REPORT

**Application Number**

EP 25 17 8602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 336 536 A1 (ROLLS ROYCE CORP [US] ET AL.) 20 June 2018 (2018-06-20) | 1-5, 7-11,14, 15 | INV. F04D27/00 F16K37/00 |
| A | * paragraph [0008] - paragraph [0076]; figures 1-3 * | 6 | G01N29/12 |
| X | US 7 290 450 B2 (ROSEMOUNT INC [US]) 6 November 2007 (2007-11-06) * column 2, line 48 - column 16, line 21; figures 1-8 * | 1-5,7-15 | |
| A | WO 2022/238504 A1 (INVENTIAIR AB [SE]) 17 November 2022 (2022-11-17) * the whole document * | 1-15 | |
| A | US 2018/003184 A1 (DOOLEY KEVIN ALLAN [CA] ET AL) 4 January 2018 (2018-01-04) * the whole document * | 1-15 | |

**TECHNICAL FIELDS SEARCHED (IPC)**

F04D
G01N
F16K

The present search report has been drawn up for all claims

| Place of search | Date of completion of the search | Examiner |
|---|---|---|
| Munich | 7 November 2025 | Lyons, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8602

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | | Publication date | Patent family member(s) | | Publication date |
|---|---|---|---|---|---|---|
| EP 3336536 | A1 | | 20-06-2018 | EP | 3336536 A1 | 20-06-2018 |
| | | | | US | 2018154377 A1 | 07-06-2018 |
| US 7290450 | B2 | | 06-11-2007 | CN | 1853098 A | 25-10-2006 |
| | | | | EP | 1646864 A2 | 19-04-2006 |
| | | | | JP | 4624351 B2 | 02-02-2011 |
| | | | | JP | 2007531868 A | 08-11-2007 |
| | | | | RU | 2324171 C2 | 10-05-2008 |
| | | | | US | 2005011278 A1 | 20-01-2005 |
| | | | | WO | 2005010522 A2 | 03-02-2005 |
| WO 2022238504 | A1 | | 17-11-2022 | EP | 4337894 A1 | 20-03-2024 |
| | | | | EP | 4337895 A1 | 20-03-2024 |
| | | | | SE | 2150609 A1 | 13-11-2022 |
| | | | | US | 2024219052 A1 | 04-07-2024 |
| | | | | US | 2024230127 A1 | 11-07-2024 |
| | | | | WO | 2022238501 A1 | 17-11-2022 |
| | | | | WO | 2022238504 A1 | 17-11-2022 |
| US 2018003184 | A1 | | 04-01-2018 | CA | 2923498 A1 | 07-07-2016 |
| | | | | US | 2018003184 A1 | 04-01-2018 |
| | | | | WO | 2016127241 A1 | 18-08-2016 |

EPO FORM P0459

For more details about this annex : see Official Journal of the European Patent Office, No. 12/82